# EUROPÄISCHE PATENTSCHRIFT

(11) **EP 2 608 996 B1**
(45) Veröffentlichungstag und Bekanntmachung des Hinweises auf die Patenterteilung: **14.01.2015**
(21) Anmeldenummer: 11749342.9
(22) Anmeldetag: 09.08.2011
(51) Int. Cl.: B62D 5/04, H02H 7/122

(54) **SICHERHEITSSCHALTUNG FÜR EINEN ELEKTROMOTOR EINER ELEKTROMECHANISCHEN LENKUNG**
SAFETY CIRCUIT FOR AN ELECTRIC MOTOR OF AN ELECTROMECHANICAL STEERING SYSTEM
CIRCUIT DE SÉCURITÉ POUR UN MOTEUR ÉLECTRIQUE D'UNE DIRECTION ÉLECTROMÉCANIQUE

(30) Priorität: 23.08.2010 DE 102010035149
(43) Veröffentlichungstag der Anmeldung: 03.07.2013
(73) Patentinhaber: ThyssenKrupp Presta AG, 9492 Eschen (LI)
(72) Erfinder: DZSUDZSAK, Gergely, H-8945 Bak (HU)
(74) Vertreter: Lenzing Gerber Stute
(86) Internationale Anmeldenummer: PCT/EP2011/003979
(87) Internationale Veröffentlichungsnummer: WO 2012/031656

(56) Entgegenhaltungen:
- EP-A1- 2 112 051
- DE-A1- 10 205 963
- DE-A1-102008 000 145

## Beschreibung

Die vorliegende Erfindung betrifft eine Vorrichtung mit den Merkmalen des Oberbegriffs des Anspruchs 1 sowie eine Schaltung nach dem Oberbegriff des Anspruchs 5.

Elektromechanische Lenkungen weisen üblicherweise einen permanent erregten Synchronmotor als Servomotor auf. Servomotoren dieser Bauart werden von einer Steuerung über einen Satz von MOSFETs angesteuert, wobei bei drei Phasenwicklungen insgesamt sechs MOSFETs vorgesehen sind. Je ein MOSFET schaltet die zugeordnete Phasenwicklung auf die Bordspannung oder das Massepotential. Dieses erfolgt mit hoher Frequenz, so dass in der Phasenwicklung der zeitliche Mittelwert als Effektivspannung wirkt.

Permanent erregte Synchronmotoren haben die Eigenschaft, bei elektrischen Fehlern wie beispielsweise bei Kurzschlüssen im Motor oder in der Ansteuerung ein Bremsmoment zu erzeugen, so dass ein derartiger Fehler nicht nur zu einem Ausfall der Lenkunterstützung führen kann, sondern der Lenkbewegung des Fahrers auch noch ein zusätzlicher Widerstand entgegengesetzt wird. Dies ist bei Lenksystemen für Kraftfahrzeuge aus Sicherheitsgründen nicht tolerierbar.

Es ist bekannt, zur Vermeidung dieses Zustandes eine Auftrennung der Phasenzuleitungen zum Motor oder im Sternpunkt des Motors vorzunehmen. Hierzu werden zum Teil im Stand der Technik elektromechanische Relais vorgeschlagen, die jedoch mechanisch für Anwendungen im Kraftfahrzeug nicht ausreichend robust und relativ teuer sind.

Aus der Druckschrift EP 0 857 135 B1 ist eine elektrische Servolenkung für ein Fahrzeug bekannt, das einen über ein Getriebe mit einer Lenkeinrichtung des Fahrzeugs verbundenen Elektromotor aufweist, wobei der Elektromotor ein bürstenloser Motor mit mehreren, an einem Sternpunkt verbundenen Phasenwicklungen ist. Dabei ist vorgesehen, dass in mindestens zwei Phasen des Motor ein Schaltmittel angeordnet ist, welches zwischen einer geschlossenen Stellung, bei der in der Phasenwicklung Strom fließen kann, und einer offenen Stellung bewegbar ist, die verhindert, dass in der jeweiligen Phasenwicklung des Motors Strom fließt. Das Schaltmittel ist am Sternpunkt des Motors angeordnet, so dass beim Öffnen des Schaltmittels die Phasenwicklung vom Sternpunkt getrennt wird. Das Schaltmittel umfasst einen Schalter oder ein Relais, der beziehungsweise das zwischen einem Ende der Phasenwicklung und der Treiberschaltung des Motors in Reihe geschaltet ist.

Technische Lösungen, die Halbleiter als Schaltmittel umfassen, sind beispielsweise aus den Druckschriften DE 10 2004 023 713 A1, DE 10 2007 024 659 A1 und EP 2 112 051 A1 bekannt. Die Druckschriften zeigen mehrere Ausführungsbeispiele mit jeweils sechs MOSFETs für die Ansteuerung der Wicklungen und mit weiteren MOSFETs, die als Sicherheitsschalter zwischen der Treiberschaltung und den Motorwicklungen oder zwischen den Versorgungsleitungen der Bordspannung und den Treiberschaltungen vorgesehen sind. Im Falle einer elektrischen Störung sollen diese Sicherheitsschalter die elektrische Verbindung zwischen der Treiberschaltung und den Wicklungen auftrennen. Die Wicklungen sind dann nicht kurzgeschlossen und können kein Bremsmoment erzeugen.

Die Druckschrift WO 03/099632 A1 zeigt verschiedene Schaltungen für einen Elektromotor in einem Kraftfahrzeug, bei dem im Falle einer Störung ein Bremsmoment verhindert oder kompensiert werden soll. Einerseits ist eine Sternschaltung mit den oben beschriebenen Eigenschaften beschrieben, andererseits werden aufwändigere Vollbrückenschaltungen beschrieben.

Es ist deshalb Aufgabe der vorliegenden Erfindung, bei einer elektrisch unterstützten Kraftfahrzeuglenkung mit einem in Sternschaltung angeschlossenen Elektromotor eine Schaltung anzugeben, bei der die als Sicherheitsschalter vorgesehenen MOSFETs mit einem geringeren Betriebsstrom beaufschlagt werden und die auch bei Ausfall einzelner Sicherheitsschalter die Phasenwicklungen des Elektromotors noch zuverlässig voneinander trennt.

Diese Aufgabe wird von einer Vorrichtung mit den Merkmalen des Anspruchs 1 gelöst.

Diese Aufgabe wird bei einer elektromechanischen Kraftfahrzeugservolenkung, mit einem dreiphasigen, permanent erregten Elektromotor, der über eine elektronische Steuerung und Zuleitungen aus einem Gleichspannungsbordnetz eines Kraftfahrzeugs betreibbar ist, wobei der Elektromotor mindestens drei Phasenwicklungen aufweist, die einerseits in einem Sternpunkt in Sternschaltung miteinander verbunden sind und andererseits jeweils über Leitungen mit einer Treiberschaltung verbunden sind, wobei die Treiberschaltung jede der Leitungen über jeweils einen ersten MOSFET einer ersten Gruppe mit der positiven Zuleitung und über jeweils einen zweiten MOSFET einer zweiten Gruppe mit der negativen (mit dem Minuspol oder der Masse des Fahrzeugs verbundenen) Zuleitung in Abhängigkeit von einer Steuerung verbindet, und wobei weitere MOSFETs als Sicherheitsschalter vorgesehen sind, dadurch gelöst, dass folgende Merkmale vorgesehen sind:
- die weiteren MOSFETs umfassen insgesamt sechs MOSFETs in einer dritten Gruppe und einer vierten Gruppe, wobei
- jeweils ein MOSFET der ersten Gruppe liegt in Reihe mit einem MOSFET der dritten Gruppe zwischen der positiven Zuleitung und einer der Leitungen zu den Phasenwicklungen, und
- jeweils ein MOSFET der zweiten Gruppe liegt in Reihe mit einem MOSFET der vierten Gruppe zwischen der negativen Zuleitung und einer der Leitungen zu den Phasenwicklungen, so dass jeweils zwei MOSFETs zwischen jeder Zuleitung und jeder zu den Phasenwicklungen führenden Leitungen angeordnet sind,
- jeweils wenigstens ein MOSFET und maximal zwei MOSFETs der vier mit einer Leitung verbundenen MOSFETs ist mit seiner parasitären Diode in Durchlassrichtung bezüglich des Gleichspannungsbordnetzes angeordnet, und
- zumindest eine der Dioden in einer der Gruppen von MOSFETs ist in Sperrrichtung geschaltet.

Auf diese Weise kann verhindert werden, dass bei einem Kurzschluss zwischen der positiven und der negativen Zuleitung und bei manueller Betätigung der Lenkung ein Induktionsstrom fließt, der die manuelle Betätigung bremst oder ganz verhindert.

Die Erfindung wird bevorzugt auf Elektromotoren mit genau drei Phasenwicklungen angewendet.

Vorteilhafte Ausführungen sehen vor, dass bezüglich des Gleichspannungsbordnetzes die MOSFETs der ersten Gruppe, der zweiten Gruppe und der dritten Gruppe mit ihren parasitären Dioden in Sperrrichtung und dass die MOSFETs der vierten Gruppe mit ihren parasitären Dioden in Durchlassrichtung angeordnet sind, oder dass bezüglich des Gleichspannungsbordnetzes die MOSFETs der ersten Gruppe, der zweiten Gruppe und der vierten Gruppe mit ihren parasitären Dioden in Sperrrichtung und dass die MOSFETs der dritten Gruppe mit ihren parasitären Dioden in Durchlassrichtung angeordnet sind.

Es kann auch vorgesehen sein, dass bezüglich des Gleichspannungsbordnetzes die MOSFETs der ersten Gruppe und der zweiten Gruppe mit ihren parasitären Dioden in Sperrrichtung und dass die MOSFETs der dritten Gruppe und der vierten Gruppe mit ihren parasitären Dioden in Durchlassrichtung angeordnet sind.

Weiterhin wird die erfinderische Aufgabe mit einer Schaltung mit den Merkmalen des unabhängigen Anspruchs 5 gelöst.

Nachfolgend werden Ausführungsbeispiele der vorliegenden Erfindung anhand der Zeichnungen beschrieben. Es zeigen:
- Figur 1:: eine elektromechanische Servolenkung in einer schematischen Darstellung mit mehreren Möglichkeiten zur Anordnung des Servomotors;
- Figur 2:: eine Schaltung zur Ansteuerung eines permanent erregten Synchronmotors mit sechs MOSFETs zur Steuerung des Motorstroms und sechs als MOSFETs ausgeführten Sicherheitsschaltern;
- Figur 3:: eine Schaltung wie in Figur 2 dargestellt, jedoch mit einer anderen Anordnung der als MOSFETs ausgeführten Sicherheitsschalter;
- Figur 4:: eine Schaltung wie in Figur 2 dargestellt, jedoch mit einer anderen Anordnung der als MOSFETs ausgeführten Sicherheitsschalter;
- Figur 5:: eine Schaltung wie in Figur 2 dargestellt, jedoch mit einer anderen Anordnung der als MOSFETs ausgeführten Sicherheitsschalter; sowie
- Figur 6:: eine Schaltung wie in Figur 2 dargestellt, jedoch mit einer anderen Anordnung der als MOSFETs ausgeführten Sicherheitsschalter.

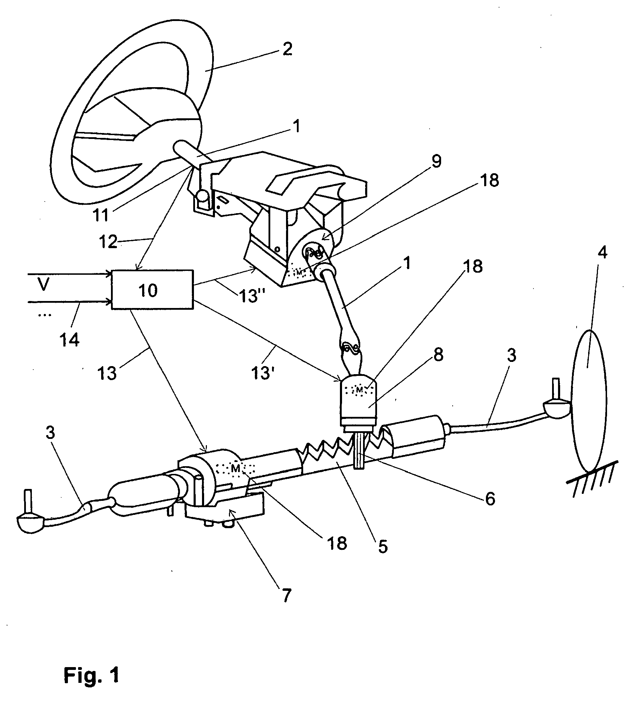

In der Fig. 1 ist eine elektromechanische Servolenkung schematisch dargestellt, wobei die Darstellung verschiedene Ausführungsformen illustrieren soll.

Eine Lenkwelle 1 ist zur Betätigung durch den Fahrer mit einem Lenkrad 2 verbunden. Spurstangen 3 sind in bekannter Weise mit gelenkten Rädern 4 des Kraftfahrzeugs verbunden. Eine Drehung der Lenkwelle 1 bewirkt eine axiale Verlagerung einer Zahnstange 5 mittels eines mit der Lenkwelle 1 drehfest verbundenen Ritzels 6.

Die elektromechanische Servolenkung kann ein lenkgetriebeseitiges Motorgehäuse 7, ein lenkritzelseitiges Motorgehäuse 8 oder ein lenksäulenseitiges Motorgehäuse 9 aufweisen. Die vorliegende Erfindung ist von der konkreten Bauart der Lenkung unabhängig. Die Motorgehäuse 7, 8 oder 9 sind mit einer Steuerung 10 verbunden, die unter anderem Drehmomentsignale von einem Drehmomentsensor 11 über eine Signalleitung 12 erhält und die entsprechende Steuersignale über Signalleitungen 13, 13' oder 13" an den in einem der Gehäusen 7, 8 oder 9 angeordneten Servoantrieb abgibt. Die Steuerung 10 selbst erhält Eingangssignale wie beispielsweise die Fahrzeuggeschwindigkeit sowie über eine Versorgungsleitung 14 die für den Betrieb erforderliche Bordspannung des Kraftfahrzeugs.

In den Gehäusen 7, 8 oder 9 ist ein Servomotor 18 vorgesehen, der letztlich in Abhängigkeit der Eingangssignale des Sensors 11 oder der übrigen, vom Fahrzeug gelieferten Eingangssignale angesteuert wird. Dieser Aufbau ist aus dem Stand der Technik bekannt.

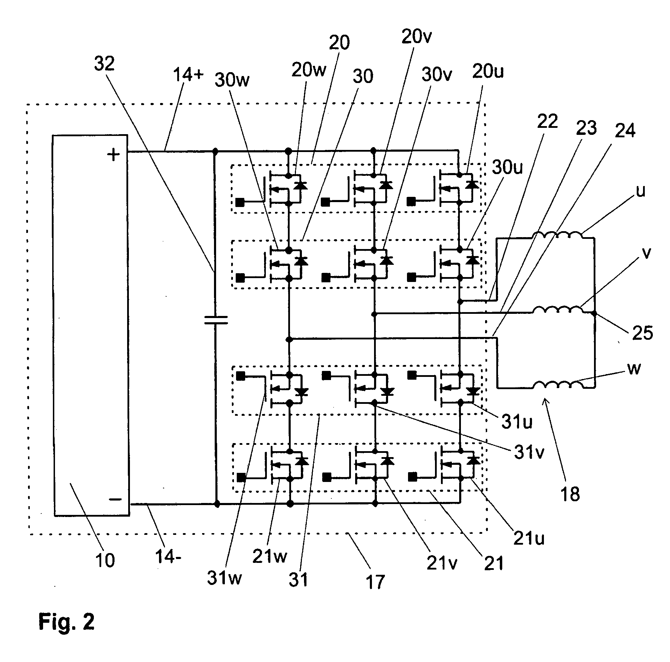

Bei den Servomotoren 18 handelt es sich bei der vorliegenden Erfindung um permanent erregte Synchronmotoren. Die Steuerung 10 ist, was die Ansteuerung der Phasenwicklungen des Servomotors 18 angeht, als Inverter aufgebaut. Diese Schaltung ist in der nachfolgenden Fig. 2 näher dargestellt. Als Servounterstützung kann im Sinne der Erfindung sowohl eine Drehmomentenüberlagerung, zur Reduktion des vom Fahrer beim Lenken aufzubringenden Drehmoments, als auch eine Drehwinkelüberlagerung zur Überlagerung von Zusatzlenkwinkeln auf den vom Fahrer in das Lenkrad 2 eingebrachten Lenkwinkel, verstanden werden.

Die Fig. 2 zeigt die prinzipielle Schaltung des Leistungsteils der Steuerung 10. Die Versorgungsleitung 14+ ist dem positiven Pol der Versorgungsleitung 14, die Versorgungsleitung 14- ist mit dem negativen Pol der Versorgungsleitung 14 oder dem Masseanschluss der Bordelektrik des Kraftfahrzeugs verbunden, die in üblicher Weise mit Gleichspannung mit negativer Masse arbeitet. Eine erste Gruppe 20 umfasst drei MOSFETs 20u, 20v und 20w zur Beaufschlagung der drei Phasenwicklungen u, v und w mit der Bordspannung. Eine zweite Gruppe 21 von insgesamt drei weiteren MOSFETs 21u, 21v und 21w ist für die Beaufschlagung der Phasenwicklungen u, v und w mit dem Massepotential vorgesehen. Die beiden Gruppen 20 und 21 speisen hierfür insgesamt drei Leitungen 22, 23 und 24. Die Phasenwicklungen u, v und w sind an einem Sternpunkt 25 miteinander in Sternschaltung verbunden.

Eine dritte Gruppe 30 mit drei MOSFETs 30 u, 30 v und 30 w ist mit der ersten Gruppe 20 in Reihe geschaltet. Dabei sind die einzelnen MOSFETs 30 u, 30 v und 30 w so orientiert, dass ihre parasitären oder intrinsischen Dioden in die gleiche Richtung weisen wie diejenigen der ersten Gruppe von MOSFETs 20 u, 20 v und 20 w.

Eine vierte Gruppe 31 mit drei MOSFETs 31 u, 31 v und 31 w ist in Reihe mit der zweiten Gruppe 21 geschaltet. Hierbei sind die einzelnen MOSFETs so orientiert, dass ihre parasitären Dioden den parasitären Dioden der MOSFETs 21 u, 21 v und 21 w der zweiten Gruppe entgegengesetzt gerichtet sind.

Zwischen den beiden Versorgungsleitungen 14+ und 14- ist schließlich noch ein Glättungskondensator 32 vorgesehen, der hochfrequente Rückwirkungen aus dem Elektromotor und den davor angeordneten MOSFETs unterdrückt.

Die vier Gruppen von MOSFETs werden über die Steuerung und die Steuerleitungen 13, die in der Figur 2 nicht dargestellt sind, angesteuert. Dazu werden die Steuerelektroden (gate) der einzelnen MOSFETs mit den erforderlichen Steuersignalen beaufschlagt.

Im Einzelnen sind die MOSFETs der dritten Gruppe 30 und der vierten Gruppe 31 als Sicherheitsschalter vorgesehen. Dies bedeutet im Betrieb, dass die einzelnen MOSFETs der Gruppen 30 und 31 dauerhaft leitend geschaltet sind, solange die Lenkvorrichtung aktiv ist und keine Störung auftritt.

Die MOSFETs der ersten Gruppe 20 und der zweiten Gruppe 21 sind als Treiber vorgesehen. Diese Treiber-MOSFETs der Gruppen 20 und 21 sind üblicherweise so geschaltet, dass ihre intrinsischen oder parasitären Dioden bezüglich der Bordspannung in Sperrrichtung geschaltet sind. In Abhängigkeit von den Steuersignalen verbinden sie die einzelnen Phasenwicklungen u, v und w entweder mit dem positiven Potenzial oder mit dem Massepotenzial. Dies erfolgt mit hoher Frequenz, so dass in den einzelnen Wicklungen u, v und w der zeitliche Mittelwert als Betriebsspannung zur Erzeugung eines Unterstützungsmoments wirksam ist.

Wie einleitend beschrieben wurde, kann eine elektrische Störung in der Steuerung oder in dem Motor selbst dazu führen, dass Phasenwicklungen kurzgeschlossen werden und bei einer Lenkbewegung die dann vom Fahrer ohne Servounterstützung ausgeübt würde, ein Bremsmoment durch den in den Wicklungen entstehenden Induktionsstrom der Lenkbewegung entgegen wirkt. Dies soll ausgeschlossen sein.

Eine Störung kann beispielsweise darin bestehen, dass in der Steuerung 10 oder in den Zuleitungen 14 ein Kurzschluss auftritt. Beispielsweise kann der Glättungskondensator 32 einen Kurzschluss entwickeln, so dass die beiden Leitungen 14+ und 14- leitend miteinander verbunden sind. In diesem Fall würde bei einer durch das externe Drehmoment der Lenksäule erzwungenen Drehung des Elektromotors 18 eine Induktionsspannung in den Wicklungen u, v und w entstehen. Solange die MOSFETs der vier Gruppen 20, 21, 30 oder 31 leitend sind, können Induktionsströme fließen und die Drehung des Elektromotors 18 behindern. In diesem Falle werden die MOSFETs der dritten Gruppe 30 und vierten Gruppe 31, die als Sicherheitsschalter vorgesehen sind, abgeschaltet. Sie werden nichtleitend, so dass die Wicklungen u, v und w nicht mehr kurzgeschlossen sind. Es entsteht kein Induktionsstrom, der den Motor 18 bremsen könnte.

Wichtig ist hierbei, dass die MOSFETs der vierten Gruppe 31 mit ihren parasitären Dioden entgegen den MOSFETs der zweiten Gruppe 21 orientiert sind. MOSFETs sind auch im abgeschalteten Zustand elektrisch leitend in Richtung der parasitären Diode, wenn nämlich eine extern angelegte Spannung ausreichend hoch ist, um die Diode in Durchlassrichtung leitend zu machen. Am Beispiel der beiden Wicklungen u und v würde dies bei kurzgeschlossenen Glättungskondensator 32 bedeuten, dass der Induktionsstrom aus der Wicklung u über die Leitung 22 durch den MOSFET 20 u und den MOSFET 30 u zu den Glättungskondensator 32 fließt, welcher leitend ist. Von dort aus kann der Strom dann weiter zu dem MOSFET 21 v fließen. Da der MOSFET 31v über die Leitung 23 zu der Wicklung v schließen würde, entgegengesetzt gerichtet ist, ist die parasitäre Diode hier in Sperrrichtung geschaltet. Der Stromkreis ist hier unterbrochen. Es fließt kein Induktionsstrom. Wäre der MOSFET 31 v in gleicher Richtung wie der MOSFET 21 v geschaltet, so würde auch hier ein Strom über die parasitäre Diode fließen können und der in den Wicklungen u und v entstehende Induktionsstrom könnte ein Bremsmoment erzeugen. Dies wäre genau dann der Fall, wenn die induzierte Spannung in den Wicklungen u und v höher ist als die Summe der Spannungen, die die parasitären Dioden der MOSFETs benötigen, um in Durchlassrichtung leitend zu werden.

In einem Ausführungsbeispiel, bei dem die parasitäre Diode des MOSFETs jeweils den Bandabstand oder die Diffusionsspannung einer Siliziumdiode von 0,6 Volt aufweist, würde im Störungsfalle eine aus dem Stand der Technik bekannte Schaltung, bei der alle MOSFETs gleichsinnig angeordnet sind, ab einer Induktionsspannung von 4 x 0,6 Volt = 2,4 Volt leitend werden. Der Elektromotor 18 würde bei Überschreiten dieser Spannung dann durch den einsetzenden Induktionsstrom abrupt gebremst werden. Bei der erfindungsgemäßen Schaltung nach Figur 2 kann dieser Effekt aufgrund der gegensinnig geschalteten MOSFETs der vierten Gruppe 31 nicht auftreten, da die parasitären Dioden der vierten Gruppe 31 in Sperrrichtung gegenüber den übrigen MOSFETs der anderen Gruppen geschaltet sind.

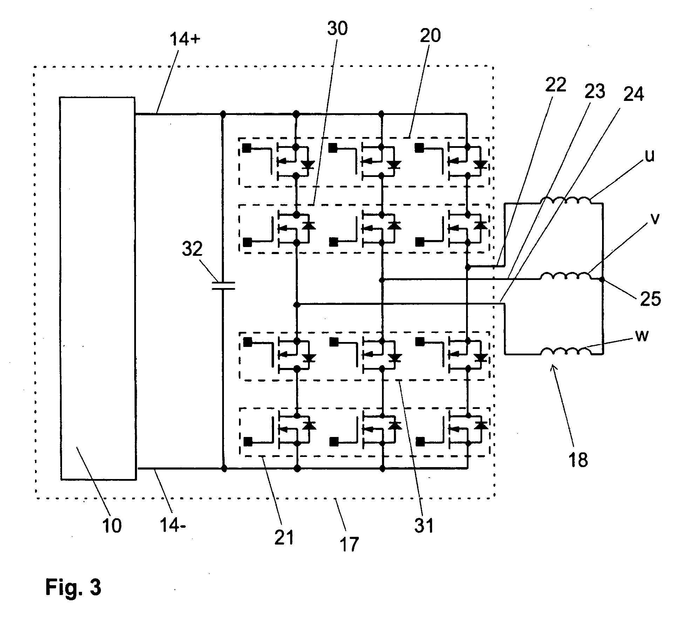

Die Figur 3 zeigt ein weiteres Ausführungsbeispiel der vorliegenden Erfindung, bei der zur besseren Übersichtlichkeit die Bezugsziffern der einzelnen MOSFETs aus Figur 2 nicht eingezeichnet sind. Im übrigen tragen gleiche oder gleichwirkende Bauelemente gleiche Bezugsziffern.

Bei diesem Ausführungsbeispiel ist eine vierte Gruppe 30' von MOSFETs, die ansonsten in der Funktion und Anordnung der vierten Gruppe 30 aus Figur 2 entspricht, gegensinnig zu den MOSFETs der ersten Gruppe 20 geschaltet. Auf diese Weise wird wie bei den unteren beiden Gruppen 21 und 31 bewirkt, dass jeweils zwei in Reihe geschaltete MOSFETs mit gegensinnig orientierten parasitären Dioden eingeschaltet sind. Ein Stromfluss bei niedrigen Induktionsspannungen ist also auch hier schon innerhalb dieses Teils der Schaltung unterbunden.

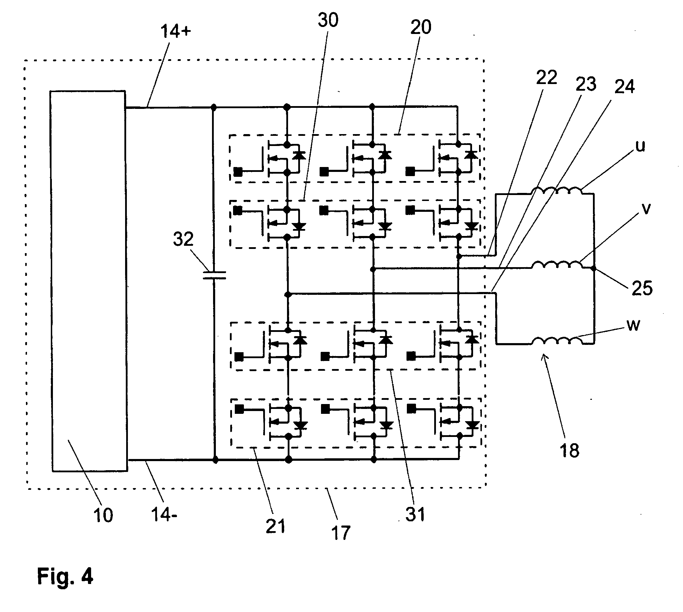

Der erfinderische Effekt ist auch bei einer Schaltung entsprechend Fig. 4 zu erzielen. Die Schaltung, die in Figur 4 veranschaulicht ist, entspricht im Wesentlichen der Schaltung der Figur 3. Allerdings sind die Richtungen der parasitären Dioden der MOSFETs genau umgekehrt, als bei der Schaltung gemäß Figur 3. Aufgrund der Reihenschaltung ist es für die Erfindung nicht wesentlich, ob die parasitäre Diode, die mit der Zuleitung 14+, 14- elektrisch verbunden ist oder die parasitäre Diode, die mit der Phasenwicklung 22, 23, 24 elektrisch verbunden ist, in Sperrrichtung oder in Durchlassrichtung geschaltet ist. Wichtig ist, dass zumindest eine der Dioden in einer der Gruppe von MOSFETs 20, 30, 21, 31 in Sperrrichtung und zumindest eine der Dioden in einer der Gruppe von MOSFETs 20, 30, 21, 31 in Durchlassrichtung geschaltet ist. In den Figuren 3 und 4 ist dabei eine vorteilhafte Ausbildung der Erfindung dargestellt, bei der in sowohl im Zweig, der mit der positive Zuleitung 14+ als auch in dem, der mit der negativen Zuleitung 14- verbunden ist, jeweils eine der parasitären Dioden in Sperrrichtung und jeweils eine der parasitären Dioden in Durchgangsrichtung geschaltet ist.

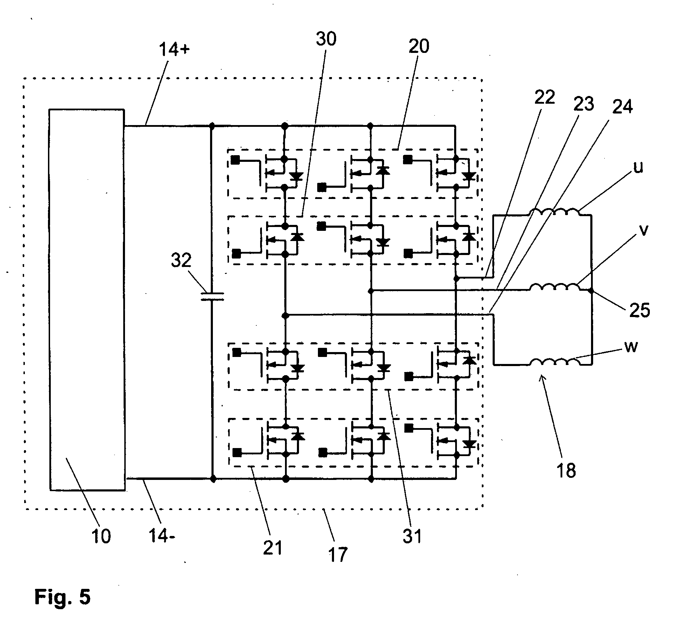

In einer alternativen Ausführungsform der Erfindung ist es auch denkbar und möglich, innerhalb der Gruppen von MOSFETs 20, 30, 21, 31 unterschiedliche Ausrichtungen der parasitären Dioden zu haben. Dies ist beispielhaft in Figur 5 dargestellt. Entscheidend zur Darstellung der Erfindung ist es nur, wie oben bereits ausgeführt, dass zumindest eine der Dioden in einer der Gruppe von MOSFETs 20, 30, 21, 31 in Sperrrichtung und zumindest eine der Dioden in einer der Gruppe von MOSFETs 20, 30, 21, 31 in Durchlassrichtung, im Stromkreis der jeweiligen Phasenwicklung zwischen der positiven Zuleitung 14+ und der negativen Zuleitung 14-, geschaltet ist.

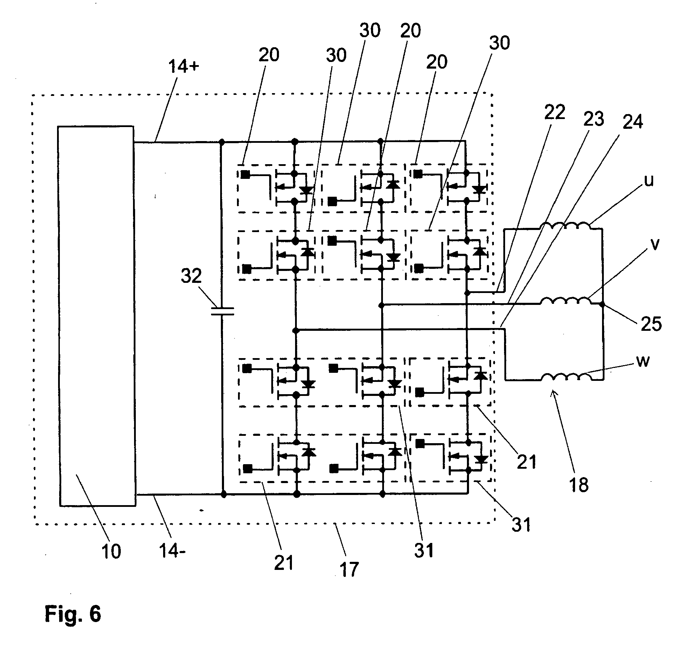

Für das Beispiel entsprechend der Figur 2 wurde erläutert, dass die erste und zweite Gruppe von MOSFETs 20, 21 die Ansteuerung der Phasenwicklungen übernehmen und die dritte und vierte Gruppe von MOSFETs 30, 31 die Sicherheitsabschaltung der Phasenwicklungen übernehmen. Dieselbe Zuordnung war für die Figuren 3, 4 und 5 vorgesehen. Es ist jedoch denkbar und möglich und von der Erfindung mit umfasst, dass die Ansteuerung der Phasenwicklungen über die dritte und vierte Gruppe von MOSFETs 30, 31 durchgeführt wird und die Sicherheitsabschaltung von der ersten und zweiten Gruppe von MOSFETs 20, 21 dargestellt ist. Es ist sogar möglich für jeden Stromkreis zwischen der positiven Zuleitungen 14+und einer der Leitungen 22, 23, 24 der Phasenwicklungen, sowie zwischen der negativen Zuleitung 14- und einer der Leitungen 22, 23, 24 der Phasenwicklungen einen beliebigen MOSFET zur Ansteuerung und den anderen MOSFET als Sicherheitsschalter einzusetzen. Es ist dabei allerdings darauf zu achten, dass jeweils zumindest ein beliebiger MOSFET mit seiner parasitären Diode im Stromkreis zwischen den jeweiligen Leitungen 22, 23, 24 der Phasenwicklung und der positiven Zuleitung 14+ oder der negativen Zuleitung 14- und den jeweiligen Leitungen 22, 23, 24 der Phasenwicklung in Sperrrichtung und zumindest ein beliebiger MOSFET mit der parasitären Diode in Durchgangsrichtung geschaltet ist. Die Ausrichtung der Dioden muss daher nicht in der jeweiligen Gruppe von MOSFETs 20, 21, 30, 31 gleich sein. In Figur 6 ist eine derartige Ausbildung der Schaltung dargestellt. Hier sind die Gruppen von MOSFETs 20, 21, 30, 31 für jede Phase speziell im Stromkreis angeordnet, wie dies durch die gestrichelten Umrandungen um die MOSFETs mit den Bezeichnungen 20, 21, 30, 31 veranschaulicht ist.

Grundsätzlich können mit vergleichbaren Schaltungen auch Motoren mit einer anderen Anzahl von Phasenwicklungen angesteuert werden. Die Anzahl MOSFETs in der jeweiligen Gruppe von MOSFETs ist dann gleich der Anzahl der Phasenwicklungen des Elektromotors. Mit anderen Worten sind dann für jede Phasenwicklung zwei MOSFETs zwischen der positiven Zuleitung 14+ und der Leitung der Phasenwicklung und zwei MOSFETs zwischen der negativen Zuleitung 14- und der Leitung der Phasenwicklung anzuordnen. Die Erfindung ist auch für diese Motoren anwendbar.

Zusammenfassend sind die Vorteile gegenüber dem Stand der Technik darin zu sehen, dass gegenüber Schaltungen, bei denen die als Sicherheitsschalter arbeitenden MOSFETs die Verbindungen zwischen den Treibern und den Phasenwicklungen oder zwischen den Phasenwicklungen und dem Sternpunkt auftrennen, die Sicherheitsschalter der Gruppen 30 und 31 nur mit dem halben Strom beaufschlagt werden, so dass hier preiswertere Bauteile verwendet werden können. Die entstehende Wärme an den einzelnen Sicherheitsschaltern ist kleiner als im Stand der Technik. Gegenüber den Schaltungen, die als Vollbrückenschaltungen ausgeführt sind, ist die Zahl der verwendeten MOSFETs verringert. Gegenüber ähnlichen Schaltungen, die ebenfalls mit zwölf MOSFETs arbeiten, bei denen die einzelnen MOSFETs jedoch in gleichsinniger Richtung geschaltet sind, ist die Betriebssicherheit beispielsweise in dem beschriebenen Fall des kurzgeschlossenen Glättungskondensators 32, durch die gegensinnig eingeschalteten MOSFETs der Gruppe 31 und gegebenenfalls auch der Gruppe 30' erheblich verbessert.

## Patentansprüche

1. Elektromechanische Kraftfahrzeugservolenkung, mit einem dreiphasigen, permanent erregten Elektromotor (18), der über eine elektronische Steuerung (10) und Zuleitungen (14+, 14-) aus einem Gleichspannungsbordnetz eines Kraftfahrzeugs betreibbar ist, wobei der Elektromotor (18) mindestens drei Phasenwicklungen (u, v, w) aufweist, die einerseits in einem Sternpunkt (25) in Sternschaltung miteinander verbunden sind und andererseits über Leitungen (22, 23 und 24) mit einer Treiberschaltung verbunden sind, wobei die Treiberschaltung jede der Leitungen (22, 23 und 24) über jeweils einen ersten MOSFET (20u, 20v, 20w) einer ersten Gruppe (20) mit der positiven Zuleitung (14+) und über jeweils einen zweiten MOSFET (21u, 21v, 21w) einer zweiten Gruppe (21) mit der negativen Zuleitung (14-) in Abhängigkeit von einer Steuerung verbindet, und wobei weitere MOSFETs (30u, 30v, 30w; 31u, 31v, 31w) als Sicherheitsschalter vorgesehen sind, **dadurch gekennzeichnet, dass**
- die weiteren MOSFETs (30u, 30v, 30w; 31u, 31v, 31w) insgesamt sechs MOSFETs (30u, 30v, 30w; 31u, 31v, 31w) in einer dritten Gruppe (30) und einer vierten Gruppe (31) umfassen, wobei
- jeweils ein MOSFET (20u, 20v, 20w) der ersten Gruppe (20) in Reihe mit einem MOSFET (30u, 30v, 30w) der dritten Gruppe (30) zwischen der positiven Zuleitung (14+) und einer der Leitungen (22, 23, 24) zu den Phasenwicklungen (u, v, w) liegt , und
- jeweils ein MOSFET (21u, 21v, 21w) der zweiten Gruppe (21) in Reihe mit einem MOSFET (31u, 31v, 31w) der vierten Gruppe (31) zwischen der negativen Zuleitung (14-) und einer der Leitungen (22, 23, 24) zu den Phasenwicklungen (u, v, w) liegt, so dass jeweils zwei MOSFETs zwischen jeder Zuleitung (14+, 14-) und jeder zu den Phasenwicklungen (u, v, w) führenden Leitungen (22, 23, 24) angeordnet sind, und dass
- jeweils wenigstens ein MOSFET der vier mit einer Leitung (22, 23, 24) verbundenen MOSFETs mit seiner parasitären Diode in Durchlassrichtung bezüglich des Gleichspannungsbordnetzes angeordnet ist, und wobei
- zumindest eine der Dioden in einer der Gruppen von MOSFETs 20, 30, 21, 31 in Sperrrichtung geschaltet ist.

2. Kraftfahrzeugservolenkung nach Anspruch 1, **dadurch gekennzeichnet, dass** bezüglich des Gleichspannungsbordnetzes die MOSFETs der ersten Gruppe (20), der zweiten Gruppe (21) und der dritten Gruppe (30) mit ihren parasitären Dioden in Sperrrichtung und dass die MOSFETs der vierten Gruppe (31) mit ihren parasitären Dioden in Durchlassrichtung angeordnet sind.

3. Kraftfahrzeugservolenkung nach Anspruch 1, **dadurch gekennzeichnet, dass** bezüglich des Gleichspannungsbordnetzes die MOSFETs der ersten Gruppe (20), der zweiten Gruppe (21) und der vierten Gruppe (31) mit ihren parasitären Dioden in Sperrrichtung und dass die MOSFETs der dritten Gruppe (30) mit ihren parasitären Dioden in Durchlassrichtung angeordnet sind.

4. Kraftfahrzeugservolenkung nach Anspruch 1, **dadurch gekennzeichnet, dass** bezüglich des Gleichspannungsbordnetzes die MOSFETs der ersten Gruppe (20) und der zweiten Gruppe (21) mit ihren parasitären Dioden in Sperrrichtung und dass die MOSFETs der dritten Gruppe (31) und der vierten Gruppe (31) mit ihren parasitären Dioden in Durchlassrichtung angeordnet sind.

5. Schaltung einer elektromechanischen Kraftfahrzeugservolenkung, mit einem dreiphasigen, permanent erregten Elektromotor (18), der über eine elektronische Steuerung (10) und Zuleitungen (14+, 14-) aus einem Gleichspannungsbordnetz eines Kraftfahrzeugs betreibbar ist, wobei der Elektromotor (18) mindestens drei Phasenwicklungen (u, v, w) aufweist, die einerseits in einem Sternpunkt (25) in Sternschaltung miteinander verbunden sind und andererseits über Leitungen (22, 23 und 24) mit einer Treiberschaltung verbunden sind, wobei die Treiberschaltung jede der Leitungen (22, 23 und 24) über jeweils einen ersten MOSFET (20u, 20v, 20w) einer ersten Gruppe (20) mit der positiven Zuleitung (14+) und über jeweils einen zweiten MOSFET (21u, 21v, 21w) einer zweiten Gruppe (21) mit der negativen Zuleitung (14-) in Abhängigkeit von einer Steuerung verbindet, und wobei weitere MOSFETs (30u, 30v, 30w; 31u, 31v, 31w) als Sicherheitsschalter vorgesehen sind, **dadurch gekennzeichnet, dass** jeweils zumindest ein beliebiger MOSFET mit seiner parasitären Diode im Stromkreis zwischen den jeweiligen Leitungen 22, 23, 24 der Phasenwicklung und der positiven Zuleitung 14+ oder der negativen Zuleitung 14- und den jeweiligen Leitungen 22, 23, 24 der Phasenwicklung in Sperrrichtung und zumindest ein beliebiger MOSFET mit der parasitären Diode in Durchgangsrichtung geschaltet ist.

## Claims

1. Electromechanical power-assisted steering system, comprising a permanently excited three-phase electric motor (18), which can be operated by means of an electronic controller (10) and supply lines (14+, 14-) from a vehicle DC electrical system of a motor vehicle, wherein the electric motor (18) comprises at least three phase windings (u, v, w), which on the one hand are connected to one another at a star point (25) of a star connection and on the other hand are connected to a driver circuit via lines (22, 23 and 24), wherein the driver circuit connects each of the lines (22, 23 and 24) respectively via a first MOSFET (20u, 20v, 20w) of a first group (20) to the positive supply line (14+) and respectively via a second MOSFET (21 u, 21 v, 21w) of a second group (21) to the negative supply line (14-), as a function of a controller, and wherein further MOSFETs (30u, 30v, 30w; 31 u, 31 v, 31 w) are provided as safety switches, **characterised in that**
- the further MOSFETs (30u, 30v, 30w; 31 u, 31v, 31w) comprise in total six MOSFETs (30u, 30v, 30w; 31 u, 31 v, 31w) in a third group (30) and a fourth group (31), wherein
- respectively one MOSFET (20u, 20v, 20w) of the first group (20) lies in series with one MOSFET (30u, 30v, 30w) of the third group (30), between the positive supply line (14+) and one of the lines (22, 23, 24) to the phase windings (u, v, w),
- respectively one MOSFET (21 u, 21 v, 21w) of the second group (21) lies in series with one MOSFET (31 u, 31 v, 31w) of the fourth group (31), between the negative supply line (14-) and one of the lines (22, 23, 24) to the phase windings (u, v, w), so that respectively two MOSFETs are arranged between each supply line (14+, 14-) and each of the lines (22, 23, 24) leading to the phase windings (u, v, w), and **in that**
- respectively at least one MOSFET of the four MOSFETs connected to a line (22, 23, 24) is arranged with its parasitic diode in the forward-bias direction in relation to the vehicle DC electrical system, and wherein
- at least one of the diodes in one of the groups of MOSFETs (20, 30, 21, 31 (is connected in the reverse-bias direction.

2. Motor vehicle according to Claim 1, **characterised in that** the MOSFETs of the first group (20), the second group (21) and the third group (30) are arranged with their parasitic diodes in the reverse-bias direction in relation to the vehicle DC electrical system, and **in that** the MOSFETs of the fourth group (31) are arranged with their parasitic diodes in the forward-bias direction.

3. Motor vehicle according to Claim 1, **characterised in that** the MOSFETs of the first group (20), the second group (21) and the fourth group (31) are arranged with their parasitic diodes in the reverse-bias direction in relation to the vehicle DC electrical system, and **in that** the MOSFETs of the third group (30) are arranged with their parasitic diodes in the forward-bias direction.

4. Motor vehicle according to Claim 1, **characterised in that** the MOSFETs of the first group (20) and the second group (21) are arranged with their parasitic diodes in the reverse-bias direction in relation to the vehicle DC electrical system, and **in that** the MOSFETs of the third group (30) and the fourth group (31) are arranged with their parasitic diodes in the forward-bias direction.

5. Circuit of an electromechanical power-assisted steering system, comprising a permanently excited three-phase electric motor (18), which can be operated by means of an electronic controller (10) and supply lines (14+, 14-) from a vehicle DC electrical system of a motor vehicle, wherein the electric motor (18) comprises at least three phase windings (u, v, w), which on the one hand are connected to one another at a star point (25) of a star connection and on the other hand are connected to a driver circuit via lines (22, 23 and 24), wherein the driver circuit connects each of the lines (22, 23 and 24) respectively via a first MOSFET (20u, 20v, 20w) of a first group (20) to the positive supply line (14+) and respectively via a second MOSFET (21u, 21v, 21w) of a second group (21) to the negative supply line (14-), as a function of a controller, and wherein further MOSFETs (30u, 30v, 30w; 31 u, 31 v, 31 w) are provided as safety switches, **characterised in that** respectively at least one arbitrary MOSFET is connected with its parasitic diode in the circuit between the respective lines (22, 23, 24) of the phase winding and the positive supply line 14+ or the negative supply line (14-) and the respective lines (22, 23, 24) of the phase winding in the reverse-bias direction, and at least one arbitrary MOSFET is connected with the parasitic diode in the forward-bias direction.

## Revendications

1. Direction assistée électromécanique de véhicule avec un moteur électrique triphasé (18) à excitation permanente, utilisable au moyen d'une commande électronique (10) et de câbles d'alimentation (14+, 14-) à partir d'un circuit de bord à tension continue d'un véhicule, le moteur électrique (18) présentant au moins trois enroulements de phase (u, v, w) qui, d'un côté, sont reliés entre eux en étoile en un point neutre (25) et, de l'autre côté, sont reliés par des câbles (22, 23 et 24) à un circuit de commande, ce dernier reliant chaque câble (22, 23 et 24), via un premier MOSFET (20u, 20v, 20w) d'un premier groupe (20), au câble positif (14+) et, via un deuxième MOSFET (21u, 21v, 21w) d'un deuxième groupe (21), au câble négatif (14-), en fonction d'une commande, et les autres MOSFETs (30u, 30v, 30w ; 31u, 31v, 31w) étant prévus en tant qu'interrupteurs de sécurité, **caractérisé en ce que**
- les autres MOSFETs (30u, 30v, 30w ; 31 u, 31v, 31w) comprennent au total six MOSFETs (30u, 30v, 30w ; 31 u, 31 v, 31w) dans un troisième groupe (30) et un quatrième groupe (31), où
- à chaque fois un MOSFET (20u, 20v, 20w) du premier groupe (20) est en série avec un MOSFET (30u, 30v, 30w) du troisième groupe (30) entre le câble positif (14+) et l'un des câbles (22, 23, 24) des enroulements de phase (u, v, w), et
- à chaque fois un MOSFET (21 u, 21 v, 21w) du deuxième groupe (21) est en série avec un MOSFET (31u, 31v, 31w) du quatrième groupe (31) entre le câble négatif (14-) et l'un des câbles conducteurs (22, 23, 24) des enroulements de phase (u, v, w), et de sorte que à chaque fois deux MOSFETs soient agencé entre chacun des câbles d'alimentation (14+, 14-) et chacun des câbles (22, 23, 24) conduisant à des enroulements de phase (u, v, w) et que
- au moins un MOSFET des quatre MOSFETs reliés à un câble (22, 23,24) soit agencé avec sa diode parasite dans le sens passant quant au circuit de bord à tension continu, et où
- au moins une des diodes présente dans l'un des groupes de MOSFETs (20, 30, 21, 31 (soit montée dans le sens de blocage.

2. Direction assistée de véhicule selon la revendication 1, **caractérisée en ce que**, concernant le circuit de bord à tension continue, les MOSFETs du premier groupe (20), du deuxième groupe (21) et du troisième groupe (30) soient agencés avec leurs diodes parasites dans le sens de blocage et que les MOSFETs du quatrième groupe (31) soient agencés avec leurs diodes parasites dans le sens passant.

3. Direction assistée de véhicule selon la revendication 1, **caractérisée en ce que**, concernant le circuit de bord à tension continue, les MOSFETs du premier groupe (20), du deuxième groupe (21) et du quatrième groupe (31) soient agencés avec leurs diodes parasites dans le sens de blocage et que les MOSFETs du troisième groupe (30) soient agencés avec leurs diodes parasites dans le sens passant.

4. Direction assistée de véhicule selon la revendication 1, **caractérisée en ce que**, concernant le circuit de bord à tension continue, les MOSFETs du premier groupe (20) et du deuxième groupe (21) soient agencés avec leurs diodes parasites dans le sens de blocage et que les MOSFETs du troisième groupe (30) et du quatrième groupe (31) soient agencés avec leurs diodes parasites dans le sens passant.

5. Commutateur d'une direction assistée électromécanique de véhicule avec un moteur électrique triphasé (18) à excitation permanente, utilisable au moyen d'une commande électronique (10) et de câbles d'alimentation (14+, 14-) à partir du circuit de bord à tension continue d'un véhicule, le moteur électrique (18) présentant au moins trois enroulements de phase (u, v, w) qui, d'un côté, sont reliés entre eux en étoile en un point neutre (25) et, de l'autre côté, sont reliés par des câbles (22, 23 et 24) à un circuit de commande, ce dernier reliant chacun des câbles (22, 23 et 24), au moyen du premier MOSFET (20u, 20v, 20w) d'un premier groupe (20), au câble positif (14+) et, au moyen du deuxième MOSFET (21 u, 21v, 21w) d'un deuxième groupe (21), au câble négatif (14-), en fonction d'une commande, et les autres MOSFETs (30u, 30v, 30w ; 31 u, 31v, 31w) étant prévus en tant qu'interrupteurs de sécurité, **caractérisé en ce que** au moins un MOSFET soit relié avec sa diode parasite dans le circuit entre les câbles (22, 23, 24) respectifs de l'enroulement de phase et le câble positif (14+) ou le câble négatif (14-) et les câbles (22, 23, 24) respectifs de l'enroulement de phase dans le sens de blocage et au moins un MOSFET soit relié avec sa diode parasite dans le sens passant.
